# EUROPEAN PATENT SPECIFICATION

(11) **EP 2 240 047 B1**
(45) Date of publication and mention of the grant of the patent: **11.07.2018**
(21) Application number: 08849353.1
(22) Date of filing: 14.11.2008
(51) Int. Cl.: A46B 11/00, A46B 17/00, A61C 17/00

(54) **ORAL HYGIENE CASE WITH DENTAL FLOSS LID COMPARTMENT**
MUNDHYGIENEETUI MIT DECKELABTEIL FÜR ZAHNSEIDE
BOÎTIER D'HYGIÈNE BUCCALE COMPRENANT UN COMPARTIMENT À COUVERCLE CONTENANT DU FIL DENTAIRE

(30) Priority: 14.11.2007 BR PI0704759
(43) Date of publication of application: 20.10.2010
(73) Proprietor: Souza, Nilson Altair de, 80.220-071 Curitiba (BR)
(72) Inventor: Souza, Nilson Altair de, 80.220-071 Curitiba (BR)
(74) Representative: Magalhães Simões, José Raúl
(86) International application number: PCT/BR2008/000350
(87) International publication number: WO 2009/062278

(56) References cited:
- BE-A- 341 057
- ES-A1- 2 078 882
- JP-A- H11 290 132
- US-A- 2 868 361
- US-A- 5 040 553
- US-A- 5 415 187
- US-A- 5 832 940
- US-A- 6 129 090
- US-A1- 3 890 986
- US-A1- 6 129 090
- US-B1- 7 011 467
- US-B1- 7 011 467
- US-B1- 7 267 126

## Description

The present invention refers to a totally new case with a compartment to hold dental floss or ribbon attached to the lid, and for keeping a toothbrush or tooth paste in its body, presenting constructivity and advanced design. The case features an access to the case's interior concomitant with opening the dental floss housing for use, length and intern volume flexibility, accessories to hang, aiming to being different on the major concept which is reducing packing size of the dental floss or ribbon, paste and brush products, and specially by changing the paradigm that people don't have the habit of carrying those, allowing change of its shape, saving the use of pollutant materials, showing excellent cost-benefit ratio.

As it is of knowledge of the technicians responsible for manufacturing cases for oral hygiene products, the first cases to be developed would hold a toothbrush, a toothpaste and dental ribbon or floss arranged loose or fit in the case. Among others, the Brazilian patents MU7800574-4, MU8202290-9 and MU8500729-3, of the same inventor of the present invention, revealed improved cases with the same concept of the first cases, but still those bring inconveniences and difficulties of use, using many high priced items that also produce non-biodegradable industrial residues.

After researching, carrying cases were found as shown on the following patents:
a) US patent Des. 328, 978, that presents integrated dental floss on one of the case's extremities, and internal space for a toothbrush combined with another lid, with single for accessing the case's interior, with space only for the toothbrush and the dental floss is fixed on the other end of the case's body;
b) US patent Des. 33,782, that presents a carrying case combining toothbrush, toothpaste compartment, dental floss holder and protecting dental floss cover on the same shape as the case, without internal space for accommodating items and with fixed compartment for dental floss on one of the body's extremity;
c) US5078526 presents a tube shaped case for accommodating dental paste brush, with inferior end for fitting dental floss holder and lid together with prismatic square duct for housing the toothpaste, with no internal space for accommodating items and with fixed dental floss on one of the body's extremity;
d) US patent Des. 362341, presents a prismatic rectangular case, with space for accommodating a toothbrush with its cover and a compartment for dental floss on the opposite side, with no internal space for accommodating items and with fixed dental floss on one of the case's body extremity;
e) US5415187 presents a prismatic rectangular case combining compartment for dental floss on one of its ends, space for toothbrush and its cover in the centre, and for the toothpaste on the other end of the case, without internal space for accommodating items and with dental floss fixed on one of the body's extremity;
f) US200208474 shows a prismatic case accommodating the dental floss on one of its ends, space for toothbrush and its cover on the centre and the toothpaste on the other end, with no internal space for accommodating items and with a fixed dental floss on one of the body's end;
g) Patent US2005211263 presents a toothbrush container with torsion and ventilating cover integrated with the dental floss compartment, with room for toothbrush with dental paste compartment and a lid on one of its ends and with fixed dental floss section on the other end, with no internal space for accommodating items and with fixed dental floss on one of its body's extremity;
h) US2006260635 presents a case combining toothbrush, and dental floss compartment on its opposite end, with no internal space for accommodating items and with dental floss compartment on one of the case's body extremity;
i) US2006280548 presents a lid with dental floss compartment on its toothbrush's extremity, without internal space for accommodating items and with fixed dental floss compartment on one of the case's body extremity;
j) US2007110503 shows a case including space for toothbrush and accommodation of dental floss on the opposite side, with no internal space for accommodating items and with dental floss compartment on one of the case's body extremity.

The carrying cases revealed previously show disadvantages and limitations of having restrict space and only accommodating a toothbrush with or without a dental paste compartment, and of using a single access lid to the case's interior and also the fact that the dental floss compartment does not open and give access the case's interior. US 2,868,361 A1 discloses an oral hygiene case of a rectangular shape comprising a lid on its upper part, a room for advertising on the upper portion of the case, and an accordion folding area at the lower portion of the case.

Alternative designs of the oral hygiene case with lid compartment for dental floss of the present inventions are according to claims 1 and 2, and were developed to overcome the limitations and disadvantages of the current kits, due to its totally new constructivity and design, with access to the case's interior concomitant with the opening of the dental floss compartment for use, length and internal volume case's flexibility, with accessories to hang, allowing change of its shape, saving the use of pollutant materials, showing excellent cost-benefit ratio. Additionally, the case presents the advantages of flexibility to store brush and paste of all sizes and weights, adopting packing size reduction for transport and sales, providing consequent environment control, minimizing the use of contaminating materials for the environment and, of being able to carry advertisements on the case's body.

Obtaining the optimized carrying case of the present inventions demanded incessant technical research and searches for technologies, aiming to being different on the major concept which is reducing packing size of the dental floss or ribbon, paste and brush products specially by changing the paradigm that people don't have the habit of carrying those. Therefore this invention intends to facilitate the creation of such habit, of carrying their dental supplies in a practical way, reducing packing which contaminates the environment.

For better understanding of the present inventions, the following figures were attached containing one of the possible constructive forms:

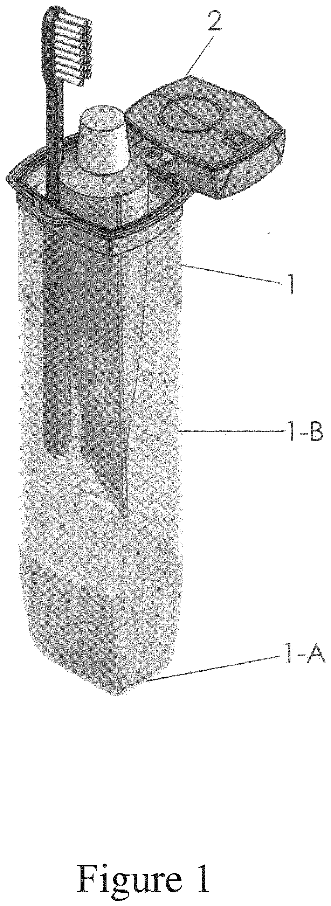

FIGURE 1, shows the case's frontal section perspective of the present patent, with the compartment for dental floss opened, and with the toothbrush and paste being taken off the case;

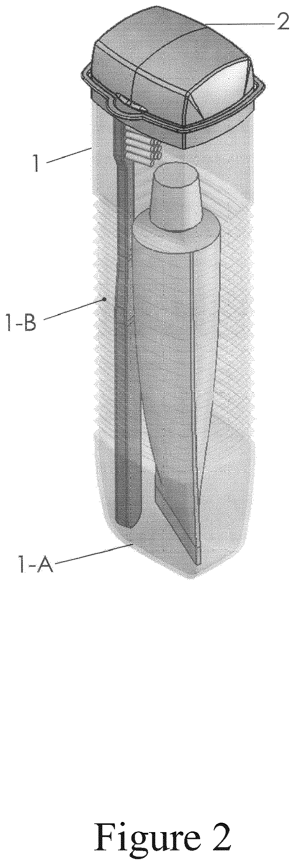

FIGURE 2, shows the case's frontal section perspective of the present patent, with the dental floss compartment closed and the toothbrush and paste placed in its interior;

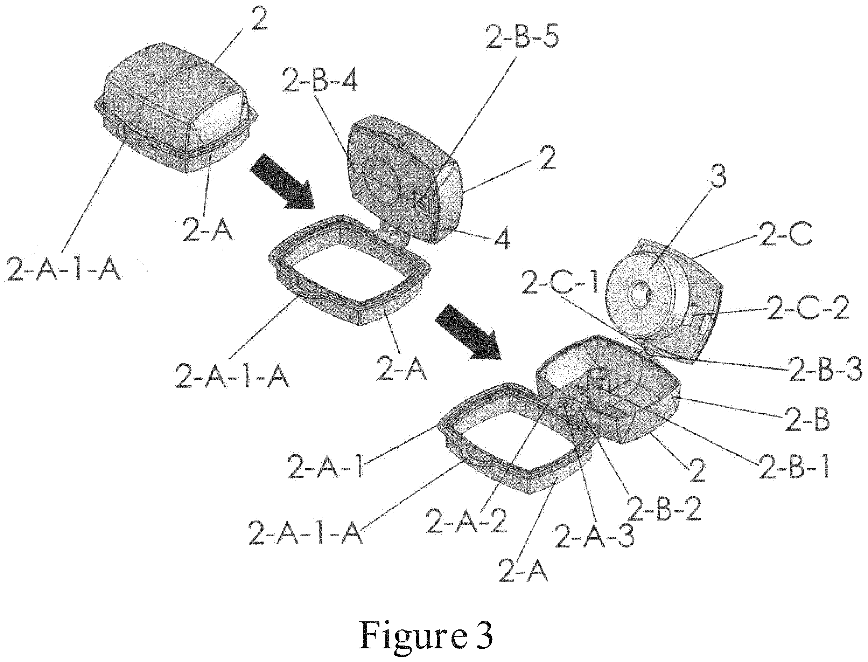

FIGURE 3, shows a frontal perspective of the lid compartment of the present patent, when closed, when opened for the use of the dental floss and opened for use of the case's interior, and also of the lid compartment when disassembled for switching the dental floss roll;

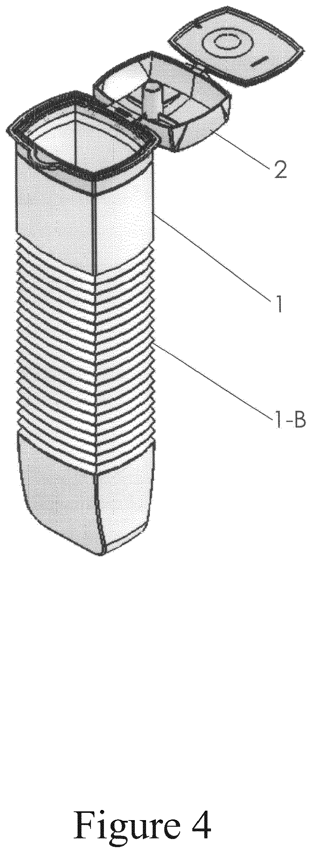

FIGURE 4, shows a frontal view of the case's body of the present patent, with the dental floss lid compartment opened, with no dental floss roll in it;

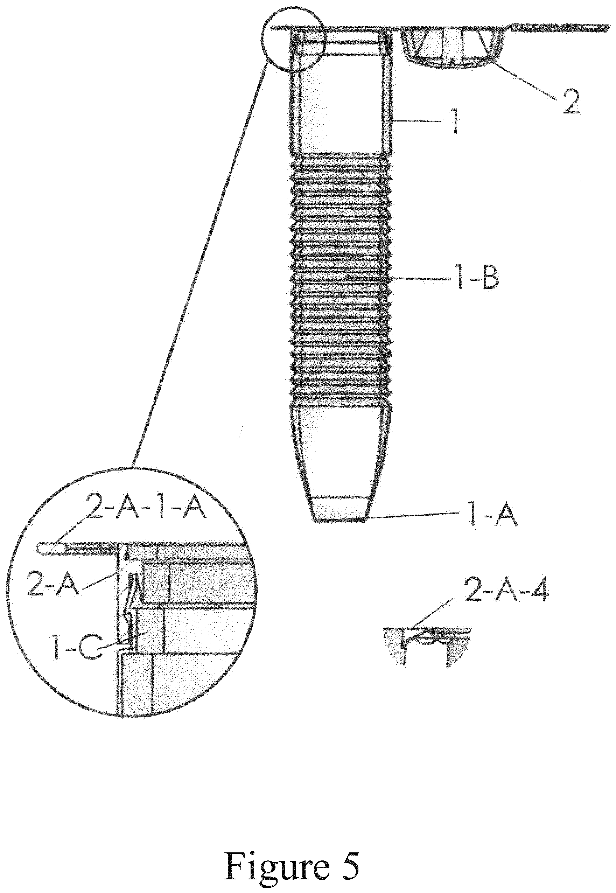

FIGURE 5, shows a transversal section view of the case of the present patent with detailed connection of the body and lid compartment;

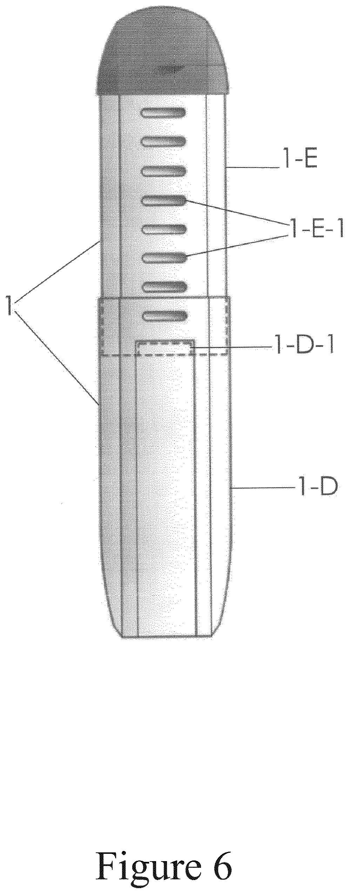

FIGURE 6, shows a side view of the case's body of the present patent with the possibility to vary the volume by locks and by lowering height.

According to the referred figures, the improved case of the present patent includes a body (1) of polygonal prismatic, cylindrical or combined shape, with a lower part (1-A) closed or with lid without a dental floss lid compartment, a central part with room for advertising and with folding (1-B) and a superior part with opening for fitting (1-C) and with compatible dimension and section with the body (1), dental floss lid compartment (2) of compatible dimension and section with the case's body (1) with a frame (2-A) with compatible shape, that fits the opening for fitting (1-C), and contains a lock (2-A-4) and a ring (2-A-1), with handle (2-A-1-A) and flap (2-A-2) with opening (2-A-3) to make a hinge with flap (2-B-2), base (2-B) of polygonal prismatic, cylindrical or combined shape, with its bottom closed and the top opened including a fitting spool tube (2-B-1) fixed on its centre, flap (2-B-2) to make a hinge with the flap (2-A-2), flap (2-B-3) making a hinge with flap (2-C-1), opening for dental floss crossing (2-B-4) and opening (2-B-5) for fitting the knife (4), the lid (2-C) with compatible shape with the base (2-B), flap (2-C-1) making a hinge with flap (2-B-3), two guides (2-C-2) placed inside the lid (2-C), on the right hand side of the conventional spool (3) and conventional knife (4). The two guides are moulded or welded onto the interior of the case.

Superior part with opening for fitting (1-C)" refers to the opening of the case wherein the dental floss lid compartment (2) locks, by means of the lock (2-A-4), when the case is closed.

"The lock (2-A-4)" is the physical means by which the dental floss or ribbon lid compartment is trapped when the case is closed. The lock is assembled onto the opening for fitting (1-C).

The "flap (2-B-2)" and the "flap (2-A-2)" form the hinge by which the opening for fitting (1-C) connects to the base (2-B). The flap (2-A-2) represents the place where the opening for fitting (1-C) joints the hinge and the "flap (2-B-2)" represents the place where the base (2-B) joints the hinge.

The "opening (2-A-3)" refers to a void space between "flap (2-A-2) and flap (2-B-2).

The "flap (2-B-3)" and the "flap (2-C-1)" form the hinge by which the base (2-B) connects to the lid (2-C). The "flap (2-B-3)" represents the place where the base (2-B) joints the hinge and the flap (2-C-1) represents the place where the lid (2-C) joints the hinge.

The central part of the case is comprised between the lower part (1-A) and the superior part with opening for fitting (1-C), containing a folding (1-B) and room for advertising.

The superior part of the case starts with the opening for fitting (1-C).

The frame (2-A) is the physical element that fits the opening for fitting (1-C) and thereby connects the dental floss lid compartment (2) with the body (1) of the case.

The base (2-B) is the physical element where the fitting for spool tube (2-B-1) is mounted and thereby the place wherein the dental floss spool is contained.

As an alternative, the body (1) can be divided in two parts: one anterior part (1-D) with a transversal section and one posterior part (1-E) with another transversal section, the anterior section containing a lock (1-D-1) and posterior part (1-E) containing height adjusters (1-E-1). The transversal section of the anterior part (1-D) allows the transversal section of the posterior part (1-E) to fit inside the anterior part (1-D), allowing variation of the case's internal volume.

"The posterior part (1-E)" refers to the upper half part of the case (1), which transversal section is such that fits inside the "anterior part (1-D)".

"The anterior part (1-D)" refers to the lower half part of the case (1), which transversal section is such that the "posterior part (1-E)" fits inside the "anterior part (1-D)".

The case can be used as described bellow:
1. For keeping objects:
   1.a. The dental floss lid compartment (2) is opened allowing the access to the case's body interior (1);
   1.b. The length of the case can be regulated by the folding (1-B) in order to keep the toothbrush, paste or another objects;
   1.c. The dental floss lid compartment is closed.
2. For taking objects off it and using them:
   2.a. The dental floss lid compartment (2) is opened, accessing the case's body interior (1);
   2.b. The dental floss can be pulled from the dental floss lid compartment (2) and cut for use;
   2.c. The toothbrush, paste or any other object can be taken off the case for use;
   2.d. Once finished using them, the objects can be kept in the case, the dental floss lid compartment (2) can be closed, and hanged or not by its handle (2-A-3).

## Claims

1. Oral hygiene case consisting of a body (1) of polygonal prismatic, cylindrical or combined polygonal prismatic/cylindrical shape, a dental floss lid compartment (2), a conventional spool (3) and a knife (4), wherein the body (1) consists of a lower part (1-A), a central part (1-B) and a superior part (1-C);
wherein the lower part (1-A) is closed or contains a conventional lid,
wherein the central part (1-B) has room for advertising and comprises a folding area; and
wherein, the superior part (1-C) has an opening in which the dental floss lid compartment is fitted; wherein the dental floss lid compartment has a dimension and section compatible with the superior part (1-C) of the body (1), and consists of a frame (2-A), a base (2-B) and a lid (2-C);
wherein the frame (2-A) has a shape compatible with the opening and fits into the opening of the superior part (1-C) of the body (1),
and consists of a containing ring (2-A-1) having a handle (2-A-1-A), a flap (2-A-2) having an opening (2-A-3), wherein the base (2-B) has a polygonal prismatic shape or cylindrical or combined polygonal prismatic/cylindrical shape, contains a closed bottom and an open top, and includes a fitting spool tube (2-B-1) fixed on its centre for fitting the conventional spool (3); a first flap (2-B-2) and a second flap (2-B-3) on the opposite side of the first flap, an opening (2-B-4) for dental floss crossing, and an opening (2-B-5) in which the knife (4) is fitted,
wherein the lid (2-C) has a shape compatible with the base (2-B), a flap (2-C-1), and two guides (2-C-2) placed on a surface of the lid (2-C) facing the closed bottom of the base (2-B) next to the conventional spool (3) that is placed on that same surface of the lid (2-C), and wherein flap (2-A-2) and flap (2-B-2) form a hinge, and wherein flap (2-B-3) and flap (2-C-1) form a hinge.

2. Oral hygiene case consisting of a body (1) of polygonal prismatic, cylindrical or polygonal prismatic/ cylindrical shape, a dental floss lid compartment (2), a conventional spool (3) and a knife (4),
wherein the body consists of an anterior part (1-D) and a posterior part (1-E);
wherein the anterior part (1-D) is closed or contains a conventional lid, wherein, the posterior part (1-E) has an opening at its upper part in which the dental floss lid compartment is fitted; wherein the anterior part (1-D) and posterior part (1-E) have each a transversal section, the transversal section of the posterior part (1-E) being larger that the transversal section of the anterior part (1-D), so that the posterior part can fit in the anterior part,
wherein the anterior part (1-D) comprises a lock (1-D-1) to allow variation of the case's internal volume,
wherein the posterior part (1-E) comprises height adjusters (1-E-1) that fit the lock (1-D-1) of the anterior part (1-D),
wherein the dental floss lid compartment (2) has a dimension and section compatible with the body (1), and consists of a frame (2-A), a base (2-B) and a lid (2-C); wherein the frame (2-A) has a shape compatible with the opening for fitting of the superior part (1-C) of the body (1),
wherein the frame (2-A) has a shape compatible with the opening and fits into the opening at the upper part of the posterior part (1-E), and consists of a containing ring (2-A-1) having a handle (2-A-1-A), a flap (2-A-2) having an opening (2-A-3), wherein the base (2-B) has a polygonal prismatic shape or cylindrical or combined polygonal prismatic/cylindrical shape, contains a closed bottom and an open top, and includes a fitting spool tube (2-B-1) fixed on its centre for fitting the conventional spool (3); a first flap (2-B-2) and a second flap (2-B-3) on the opposite side of the first flap, an opening (2-B-4) for dental floss crossing, and an opening (2-B-5) in which the knife (4) is fitted,
wherein the lid (2-C) has a shape compatible with the base (2-B), a flap (2-C-1), and two guides (2-C-2) placed on a surface of the lid (2-C) facing the closed bottom of the base (2-B) next to the conventional spool (3) that is placed on that same surface of the lid (2-C), and wherein flap (2-A-2) and flap (2-B-2) form a hinge, and wherein flap (2-B-3) and flap (2-C-1) form a hinge.

## Patentansprüche

1. Behälter für die Mundhygiene, bestehend aus einem Körper (1) mit polygonaler prismatischer, zylindrischer oder kombinierter polygonaler prismatischer/zylindrischer Form, einem Deckelfach (2) für Zahnseide, einer herkömmlichen Spule (3) und einem Messer (4), wobei der Körper (1) aus einem unteren Teil (1-A), einem mittleren Teil (1-B) und einem oberen Teil (1-C) besteht; wobei der untere Teil (1-A) geschlossen ist oder einen herkömmlichen Deckel enthält,
wobei der mittlere Teil (1-B) Platz für Werbung hat und einen Falzbereich umfasst; und
wobei der obere Teil (1-C) eine Öffnung hat, in die das Deckelfach für Zahnseide eingepasst ist;
wobei das Deckelfach für Zahnseide Maße und Abschnitte hat, die mit dem oberen Teil (1-C) des Körpers (1) kompatibel sind, und aus einem Rahmen (2-A), einer Basis (2-B) und einem Deckel (2-C) besteht;
wobei der Rahmen (2-A) eine Form hat, die mit der Öffnung kompatibel ist und in die Öffnung des oberen Teils (1-C) des Körpers (1) passt,
und aus einem haltenden Ring (2-A-1) mit einem Griff (2-A-1-A), einer Klappe (2-A-2) mit einer Öffnung (2-A-3) besteht,
wobei die Basis (2-B) eine polygonale prismatische Form oder zylindrische oder kombinierte polygonale prismatische/zylindrische Form hat, eine geschlossene Unterseite und eine offene Oberseite enthält und ein passendes Spulenrohr (2-B-1) einschließt, das in ihrer Mitte befestigt ist, um zur herkömmlichen Spule (3) zu passen; eine erste Klappe (2-B-2) und eine zweite Klappe (2-B-3) auf der gegenüberliegenden Seite der ersten Klappe, eine Öffnung (2-B-4) zum Durchgang von Zahnseide und eine Öffnung (2-B-5), in die das Messer (4) eingepasst ist,
wobei der Deckel (2-C) eine Form, die mit der Basis (2-B) kompatibel ist, eine Klappe (2-C-1) und zwei Führungen (2-C-2) hat, die sich auf dem Deckel (2-C) befinden, wobei sie der geschlossenen Unterseite der Basis (2-B) neben der herkömmlichen Spule (3) zugewandt sind, die sich auf der gleichen Fläche der Spule (2-C) befindet, und wobei Klappe (2-A-2) und Klappe (2-B-2) ein Gelenk bilden, und wobei Klappe (2-B-3) und Klappe (2-C-1) ein Gelenk bilden.

2. Behälter für die Mundhygiene, bestehend aus einem Körper (1) mit einer polygonalen prismatischen, zylindrischen oder polygonalen prismatischen/zylindrischen Form, einem Deckelfach (2) für Zahnseide, einer herkömmlichen Spule (3) und einem Messer (4),
wobei der Körper aus einem vorderen Teil (1-D) und einem hinteren Teil (1-E) besteht;
wobei der vordere Teil (1-D) geschlossen ist oder einen herkömmlichen Deckel enthält, wobei der hintere Teil (1-E) eine Öffnung an seinem oberen Teil hat, in den das Deckelfach für Zahnseide eingepasst ist;
wobei der vordere Teil (1-D) und der hintere Teil (1-E) jeweils einen Querschnitt haben, wobei der Querschnitt des hinteren Teils (1-E) größer als der Querschnitt des vorderen Teils (1-D) ist, sodass der hintere Teil in den vorderen Teil passen kann,
wobei der vordere Teil (1-D) einen Verschluss (1-D-1) umfasst, um eine Variation des inneren Volumens des Behälters zu erlauben, wobei der hintere Teil (1-E) Höhenversteller (1-E-1) umfasst, die zu dem Verschluss (1-D-1) des vorderen Teils (1- D) passen,
wobei das Deckelfach (2) für Zahnseide Maße und Abschnitte hat, die mit dem Körper (1) kompatibel sind, und aus einem Rahmen (2-A), einer Basis (2-B) und einem Deckel (2-C) besteht; wobei der Rahmen (2-A) eine Form hat, die mit der Öffnung kompatibel ist, um zu dem oberen Teil (1-C) des Körpers (1) zu passen,
wobei der Rahmen (2-A) eine Form hat, die mit der Öffnung kompatibel ist und in die Öffnung am oberen Teil des hinteren Teils (1-E) passt und aus einem haltenden Ring (2-A-1) mit einem Griff (2-A-1-A), einer Klappe (2-A-2) mit einer Öffnung (2-A-3) besteht,
wobei die Basis (2-B) eine polygonale prismatische Form oder zylindrische oder kombinierte polygonale prismatische/zylindrische Form hat, eine geschlossene Unterseite und eine offene Oberseite hat und ein passendes Spulenrohr (2-B-1) einschließt, das in ihrer Mitte befestigt ist, um zur herkömmliche Spule (3) zu passen; eine erste Klappe (2-B-2) und eine zweite Klappe (2-B-3) auf der gegenüberliegenden Seite der ersten Klappe, eine Öffnung (2-B-4) zum Durchgang von Zahnseide und eine Öffnung (2-B-5), in die das Messer (4) eingepasst ist, hat,
wobei der Deckel (2-C) eine Form, die mit der Basis (2-B) kompatibel ist, eine Klappe (2-C-1) und zwei Führungen (2-C-2) hat, die sich auf dem Deckel (2-C) befinden, wobei sie der geschlossenen Unterseite der Basis (2-B) neben der herkömmlichen Spule (3) zugewandt sind, die sich auf der gleichen Fläche der Spule (2-C) befindet, und wobei Klappe (2-A-2) und Klappe (2-B-2) ein Gelenk bilden, und wobei Klappe (2-B-3) und Klappe (2-C-1) ein Gelenk bilden.

## Revendications

1. Boîtier pour hygiène buccale consistant en un corps (1) de forme prismatique, cylindrique polygonale ou prismatique/cylindrique polygonale combinés, un compartiment à couvercle pour fil dentaire (2), une bobine conventionnelle (3) et une lame (4), dans lequel le corps (1) consiste en une partie inférieure (1-A), une partie centrale (1-B) et une partie supérieure (1-C) ; dans lequel la partie inférieure (1-A) est fermée ou contient un couvercle conventionnel,
dans lequel la partie centrale (1-B) a un espace à des fins publicitaires et comprend une zone pliante ; et
dans lequel, la partie supérieure (1-C) a une ouverture dans laquelle le compartiment à couvercle pour fil dentaire est introduit ;
dans lequel le compartiment à couvercle pour fil dentaire a une dimension et une section compatibles avec la partie supérieure (1-C) du corps (1), et consiste en un support (2-A), une base (2-B) et un couvercle (2-C) ;
dans lequel le support (2-A) a une forme compatible avec l'ouverture et s'introduit dans l'ouverture de la partie supérieure (1-C) du corps (1),
et consiste en un anneau de contention (2-A-1) ayant une anse (2-A-1-A), un rabat (2-A-2) ayant une ouverture (2-A-3),
dans lequel la base (2-B) a une forme prismatique polygonale ou cylindrique ou une forme prismatique/cylindrique polygonale combinés, contient une partie inférieure fermée et
une partie supérieure ouverte, et comporte un tube d'introduction de la bobine (2-B-1) fixé sur son centre pour introduire la bobine conventionnelle (3) ; un premier rabat (2-B-2) et un deuxième rabat (2-B-3) sur le côté opposé du premier rabat, une ouverture (2-B-4) pour le passage du fil dentaire, et une ouverture (2-B-5) dans laquelle la lame (4) est introduite,
dans lequel le couvercle (2-C) a une forme compatible avec la base (2-B), un rabat (2-C-1), et deux guides (2-C-2) placés sur une surface du couvercle (2-C) en regard de la partie inférieure fermée de la base (2-B) à côté de la bobine conventionnelle (3) qui est placée sur cette même surface du couvercle (2-C), et dans lequel le rabat (2-A-2) et le rabat (2-B-2) forment une charnière, et dans lequel le rabat (2-B-3) et le rabat (2-C-1) forment une charnière.

2. Boîtier pour hygiène buccale consistant en un corps (1) de forme prismatique, cylindrique polygonale ou prismatique/cylindrique polygonale, un compartiment à couvercle pour fil dentaire (2), une bobine conventionnelle (3) et une lame (4),
dans lequel le corps consiste en une partie antérieure (1-D) et une partie postérieure (1-E) ;
dans lequel la partie antérieure (1-D) est fermée ou contient un couvercle conventionnel, dans lequel, la partie postérieure (1-E) a une ouverture sur sa partie supérieure dans laquelle le compartiment à couvercle pour fil dentaire est introduit ;
dans lequel la partie antérieure (1-D) et la partie postérieure (1-E) ont chacune une section transversale, la section transversale de la partie postérieure (1-E) étant plus large que la section transversale de la partie antérieure (1-D), de sorte que la partie postérieure puisse être introduite dans la partie antérieure, dans lequel la partie antérieure (1-D) comprend une fermeture (1-D-1) pour permettre la variation du volume interne du boîtier,
dans lequel la partie postérieure (1-E) comprend des ajusteurs de hauteur (1-E-1) qui s'introduisent dans la fermeture (1-D-1) de la partie antérieure (1 -D), dans lequel le compartiment à couvercle pour fil dentaire (2) a une dimension et une section compatibles avec le corps (1), et consiste en un support (2-A), une base (2-B) et un couvercle (2-C) ;
dans lequel le support (2-A) a une forme compatible avec l'ouverture pour l'introduction de la partie supérieure (1-C) du corps (1),
dans lequel le support (2-A) a une forme compatible avec l'ouverture et s'introduit dans l'ouverture de la partie supérieure de la partie postérieure (1-E), et consiste en un anneau de contention (2-A-1) ayant une anse (2-A-1-A), un rabat (2-A-2) ayant une ouverture (2-A-3),
dans lequel la base (2-B) a une forme prismatique polygonale ou cylindrique ou une forme prismatique/cylindrique polygonale combinés, contient une partie inférieure fermée et
une partie supérieure ouverte, et comporte un tube d'introduction de la bobine (2-B-1) fixé sur son centre pour introduire la bobine conventionnelle (3) ; un premier rabat (2-B-2) et un deuxième rabat (2-B-3) sur le côté opposé du premier rabat, une ouverture (2-B-4) pour le passage du fil dentaire, et une ouverture (2-B-5) dans laquelle la lame (4) est introduite,
dans lequel le couvercle (2-C) a une forme compatible avec la base (2-B), un rabat (2-C-1), et deux guides (2-C-2) placés sur une surface du couvercle (2-C) en regard de la partie inférieure fermée de la base (2-B) à côté de la bobine conventionnelle (3) qui est placée sur cette même surface du couvercle (2-C), et dans lequel le rabat (2-A-2) et le rabat (2-B-2) forment une charnière, et dans lequel le rabat (2-B-3) et le rabat (2-C-1) forment une charnière.
